# EUROPÄISCHE PATENTSCHRIFT

(11) **EP 2 889 522 B1**
(45) Veröffentlichungstag und Bekanntmachung des Hinweises auf die Patenterteilung: **05.07.2017**
(21) Anmeldenummer: 14196671.3
(22) Anmeldetag: 05.12.2014
(51) Int. Cl.: F16K 27/02

(54) **Wasserschalteinheit**
Water switching unit
Unité de commutation d'eau

(30) Priorität: 06.12.2013 DE 102013113591
(43) Veröffentlichungstag der Anmeldung: 01.07.2015
(73) Patentinhaber: Kludi GmbH & Co. KG, 58706 Menden (DE)
(72) Erfinder: Wiesendahl, Guido, 58099 Hagen (DE); Gebhart, Paul, 58730 Fröndenberg (DE)
(74) Vertreter: Tarvenkorn, Oliver

(56) Entgegenhaltungen:
- EP-A1- 0 664 047
- EP-A2- 1 006 242
- DE-A1-102005 041 920
- DE-B3-102004 014 126
- DE-U1-202004 006 163

## Beschreibung

Die Erfindung betrifft eine Wasserschaltereinheit zum Unterbrechen und Freigeben wenigstens eines Wasserweges mit den Merkmalen des Oberbegriffs des Anspruchs 1.

Eine solche Wasserschaltereinheit ist aus der DE 20 2004 006 163 U1 bekannt. Damit kann der Durchfluss in Wasserleitungen einfach durch Tastendruck ein- und ausgeschaltet werden, wie man es von der Hauselektroinstallation gewohnt ist. Es wird keine herkömmliche Sanitärarmatur betätigt, bei der man durch Drehen eines Ventilknaufes oder Heben und Senken eines Hebels die Leitungen öffnet und wieder schließt. Allein durch Verschieben eines Ringmagneten entlang eines Gehäuserohrs kann die Wasserschalteinheit mit wenig Kraft umgeschaltet werden. Der Ringmagnet liegt dabei außen am Gehäuse, so dass keine Dichtigkeitsprobleme am Betätigungselement auftreten können. Aufgrund des geringen Platzbedarfes des einzelnen magnetischen Schaltmoduls können mehrere Wasserleitungen in einer Einheit zusammengefasst werden. Eine solche Unterputz-Wasserschaltereinheit ist insbesondere für Installationen vorteilhaft, die stromabwärts einer herkömmlichen Sanitärarmatur, durch welche auch die Mischwassertemperatur einstellbar ist, angeordnet sind, um den Durchfluss auf mehrere Zapfstellen verteilen, beispielsweise auf einen Wannenauslauf, eine Handbrause und eine zusätzliche Kopfbrause.

Nachteilig bei der bekannten Wasserschalteinheit ist allerdings der Installationsaufwand, denn vorgesehen ist dabei, für jeden Wasserweg eine Wasserzulaufleitung mit Schraubanschluss und ebenso eine Wasserauslaufleitung mit Schraubanschluss vorzusehen. Um die Leitungen beidseits durch Anschrauben an die Wasserschalteinheit anschließen zu können, müssen die Leitungen in Form von flexiblen Schläuchen ausgeführt sein, die für eine Unterputz-Installation ungeeignet sind. Ein Anschluss an fest verlegte, starre Rohrleitungen ist schon allein mangels des für die Montage erforderlichen Längenausgleichs nicht möglich. Auch kann über die bekannte Wasserschalteinheit das Leitungsnetz nicht in einfacher Weise gespült und auf Druckfestigkeit geprüft werden, wie es die Vorschriften erfordern.

Aufgabe der vorliegenden Erfindung ist es somit, die Installation und gegebenenfalls den späteren Austausch einer Wasserschaltereinheit der eingangs genannten Art zu erleichtern.

Diese Aufgabe wird erfindungsgemäß durch eine Wasserschalteinheit mit den Merkmalen des Anspruchs 1 gelöst.

Die erfindungsgemäße Wasserschalteinheit wird vorzugsweise in ein zweiteiliges System von Grundkörper und einem zugehörigen Unterputz-Anschlussblock integriert. Sie kann auf bereits vorhandene Unterputz-Anschlussblöcke aufgesetzt werden.

Der Grundkörper nimmt eine oder mehrere Magnetventileinheiten auf, die mit ihrem Dichtelement jeweils auf einen Ventilsitz im Grundkörper wirken und damit einen internen Wasserkanal sperren oder freigeben. Dabei können pro Magnetventileinheit je ein Wasserzulaufkanal und ein Wasserauslaufkanal vorgesehen sein. Es kann aber auch ein gemeinsamer Wasserzulaufkanal für mehrere Magnetventileinheiten vorgesehen sein, von dem aus eine Verteilung zu den einzelnen Ventilsitzen und darüber zu den jeweiligen Wasserauslaufkanälen erfolgt, die zu den einzelnen Zapfstellen führen.

Der Grundkörper der Wasserschalteinheit und der Unterputz-Anschlussblock besitzen jeweils aufeinander abgestimmte, insbesondere ebene Grundflächen mit korrespondierenden Lochbildern der Mündungsöffnungen der Wasserkanäle. Jeder Wasserweg in der Grundfläche des Grundkörpers geht über die Trennebene hinweg in einen Wasserweg im Unterputz-Anschlussblock über.

Der Vorteil besteht darin, zunächst den Unterputz-Anschlussblock in eine Wand einbauen zu können und die Rohrleitungen fest daran anschließen zu können, wie an sich von Sanitärarmaturen herkömmlicher Bauart bekannt. Der Unterputz-Anschlussblock kann mit einem Schutzelement abgedeckt werden. Nach Abschluss der Maurer-, Putz- und Fliesenlegerarbeiten wird das Schutzelement entfernt und der mit den Magnetventileinheiten ausgestattete Grundkörper wird auf den Unterputz-Anschlussblock aufgesetzt und damit verschraubt. Sämtliche Wasserzu- und -ablaufleitungen werden mit dem Aufsetzen des Grundkörpers gleichzeitig fertig ausgebildet.

Es braucht dann lediglich noch ein Dekorelement aufgesetzt zu werden, das beispielsweise eine Drucktaste trägt, über die der Ringmagnet betätigbar ist. Danach ist die gesamte Wasserschalteinheit sofort einsatzbereit.

Im Wartungsfall braucht lediglich eine einzelne Magnetventileinheit ausgetauscht zu werden, oder der Grundkörper wird mitsamt den daran angebrachten Magnetventileinheiten abgenommen.

Es kann auch jederzeit eine herkömmliche Sanitärarmatur aufgesetzt werden, sofern sie das gleiche Lochbild an ihrer Grundfläche aufweist.

Auch Kombinationen von herkömmlichen Schraubventilen und bistabilen Magnetventilen in einem Grundkörper sind denkbar, falls der Durchfluss in einem Wasserweg nicht nur digital ein- oder ausgeschaltet werden soll, sondern einstellbar sein soll. Dies ist erfindungsgemäß einfach möglich, weil die Magnetventileinheiten bevorzugt nicht direkt an den Grundkörper angeformt sind, sondern als separate Module in passende Aufnahmen im Grundkörper gesteckt und dort befestigt werden. Somit können auch andersartige Module in den Aufnahmen befestigt werden.

Schließlich können auch einzelne Magnetventileinheiten gegen Blinddeckel oder Blindstopfen ausgetauscht werden, um einen Wasserweg dauerhaft zu öffnen oder zu schließen.

Ein besonderer Vorteil der verwendeten bistabilen Magnetventileinheiten besteht darin, dass die manuelle Betätigung durch Verschieben eines Ringmagneten einfach in eine automatische Betätigung umrüstbar ist, indem der Ringmagnet entfernt und eine Elektromagnetspule über das Gehäuserohr gestülpt wird. Da die Betätigungseinheit in jedem Fall außerhalb der Wasser führenden Teile angeordnet wird, ist der Austausch völlig problemlos möglich. Es braucht lediglich für den Moment des Schaltvorgangs elektrische Hilfsenergie bereitgestellt zu werden. Durch die Schaltung wird der Kolben in einer von Kugelschreibern bekannten Weise durch einen Drehnockenmechanismus abwechselnd in eine seiner beiden Stellungen überführt, die dem Öffnen und Schließen der Wasserleitung entsprechen. Ist der Schaltvorgang durchgeführt, wird anschließend kein elektromagnetisches Feld mehr benötigt, um die Wasserschalteinheit stabil zu halten, und entsprechend gibt es auch keinen Verbrauch elektrischer Energie mehr.

Die Erfindung wird nachfolgend mit Bezug auf die Zeichnung näher erläutert. Die Figuren zeigen im Einzelnen:
- Fig. 1: einen Grundkörper einer Wasserschaltereinheit in Draufsicht und
- Fig. 2: eine auf einen Unterputz-Anschlussblock aufgesetzte Wasserschaltereinheit im Schnitt.

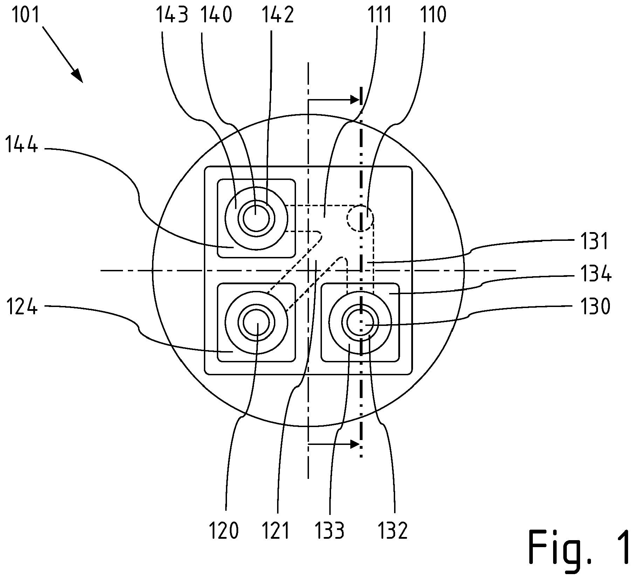

Figur 1 zeigt einen Grundkörper 101 einer Wasserschalteinheit in Draufsicht von oben. Es sind drei Ventilaufnahmen 124, 134, 144 für je eine Magnetventileinheit vorgesehen. Diese besitzen jeweils eine Vertiefung im Grundkörper 101 zur Aufnahme des Gehäuses der Magnetventileinheit und vor allem zylindrische Rohrstutzen 122, 132, 142, die die Wasserauslaufkanäle bilden, welche an der Unterseite des Grundkörpers 101 münden. Zugleich bildet deren ringförmige Oberkante jeweils einen Ventilsitz.

Um die Rohrstutzen 122, 132, 142 herum ist jeweils ein Ringraum 123, 133, 143 ausgebildet, der jeweils von einem Wasserzulaufkanal 121, 131, 141 gespeist wird. Im dargestellten Beispiel verzweigen alle Wasserzulaufkanäle 121, 131, 141 von einer gemeinsamen Wasserzulauföffnung 110 in der Grundfläche des Grundkörpers 101. Alle Mündungsöffnungen 110, 120, 130, 140 liegen mit ihren Mittelpunkten an der unteren, in Figur 1 abgewandten Grundfläche auf einem einheitlichen Teilkreis und an Eckpunkten eines imaginären Quadrats, so dass durch Drehen um jeweils 90° unterschiedliche Verbindungen mit einem Unterputz-Anschlussblock ausgebildet werden können.

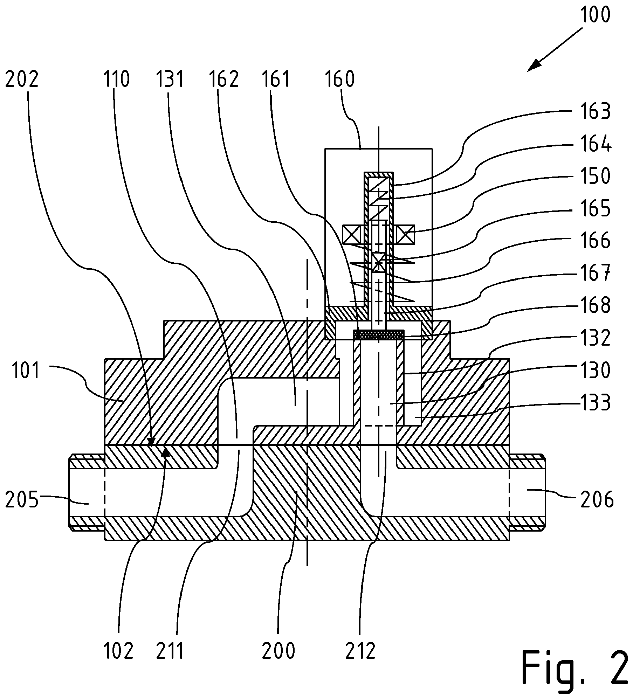

Figur 2 zeigt eine vollständige Wasserschalteinheit 100 mit einem Unterputz-Anschlussblock 200 im Schnitt und zwar entlang der in Figur 1 markierten Schnittlinie im rechten Teil.

Das Wasser wird durch einen Rohrleitungsanschlussstutzen 205 von der Seite her in den Unterputz-Anschlussblock 200 geleitet und in innen liegenden Kanälen um 90° umgelenkt und bis zu Mündungsöffnungen 211, 212 an der oberen Grundfläche 202 geführt. An der Grundfläche 202 des Unterputz-Anschlussblocks 200 liegt die Grundfläche 102 der Wasserschalteinheit 100 an. Durch die Mündung 211 der Wasserzulaufleitung im Unterputz-Anschlussblock 200 erfolgt der Übergang in eine Mündungsöffnung 110 im Grundkörper 101. In diesem ist wiederum ein innerer Wasserzulaufkanal 131 ausgebildet, der bis zu dem Ventilsitz 161 führt. An dieser Stelle ist eine Magnetventileinheit 160 eingesetzt.

Vom Ventilsitz 161 wiederum führt ein Wasserauslaufkanal 130 zu einer weiteren Mündungsöffnung in der Grundfläche an der Unterseite des Grundkörpers 101 und von dort zurück in eine Mündungsöffnung 212 im Unterputz-Anschlussblock 200. Im Unterputz-Anschlussblock 200 setzt sich der Wasserweg fort, wird um 90° zur Seite hin umgelenkt und an einer Seitenfläche in einen Rohrleitungsanschlussstutzen 206 geführt.

Die Magnetventileinheit 160 wird mit einem Basiselement 162 in den Grundkörper 101 eingesetzt. An das Basiselement 162 angesetzt ist eine Gehäuserohr 163, das oben geschlossen und unten, zum Ventilsitz 161 hin, offen ist. Darin ist ein Kolbenelement 167 verschiebbar angeordnet, das an seinem unteren Ende mit einem Dichtelement 168 verbunden ist. Das Dichtelement 168 ist hier vereinfacht als eine am Ende des Kolbenelements 167 anhängende Dichtplatte dargestellt, kann aber auch in Form einer Membran ausgebildet sein, welche randseitig im Basiselement 162 der Magnetventileinheit 160 und/oder im Grundkörper 101 eingespannt ist.

Das Kolbenelement 167 besitzt einen Magneten oder ein magnetisierbares Element 165. Außen, um das Gehäuserohr 163 mit dem darin liegenden Kolbenelement 167 herum, ist ein Ringmagnet 150 geführt. Wird dieser axial verschoben, wird auch das Kolbenelement 167 axial verschoben, wodurch das Dichtelement 168 vom Ventilsitz 161 angehoben oder daran angepresst wird.

Ein Federelement 164 innerhalb des Gehäuserohrs bewirkt eine Vorspannung des Kolbenelements 167 in Richtung des Ventilsitzes 161, so dass die Federkraft überwunden werden muss, um das Kolbenelement 167 verschieben zu können. Um den Ringmagneten 150 in einer Ruhelage an einer bestimmten axialen Position zu halten, ist ein weiteres Federelement 166 als Rückstellelement vorhanden.

Nicht dargestellt ist ein an sich bekannter Drehnockenmechanismus, der zwischen der Innenseite des Gehäuserohrs 163 und dem Kolbenelement 167 ausgebildet ist. Sie bewirkt, dass das Kolbenelement 167 mit jeder axialen Verschiebung abwechselnd in eine Öffnungs- oder in eine Sperrstellung gebracht wird. Wie von Kugelschreibermechaniken bekannt, gleiten dabei Zähne des einen Elements an einer sägezahnförmigen Kulisse an dem anderen Element ab, so dass das Kolbenelement 167 sich mit jeder von außen veranlassten axialen Bewegung jeweils um einen kleinen Winkelschritt dreht und dabei abwechselnd eine von zwei stabilen axialen Positionen annimmt.

## Patentansprüche

1. Wasserschaltereinheit (100) zum Unterbrechen und Freigeben wenigstens eines Wasserweges in einer Sanitärinstallation,
wobei zwischen wenigstens einem Wasserzulaufkanal (110) und wenigstens einem Wasserauslaufkanal (120, 130, 140) wenigstens ein Ventilsitz (161) ausgebildet ist, an dem eine bistabile Magnetventileinheit (160) eingesetzt ist, die mit ihrem Dichtelement (168) an den Ventilsitz (161) anzulegen ist;
wobei die Magnetventileinheit (160) ein Gehäuserohr (163) aufweist, das endseitig verschlossen ist und dessen Öffnung dem Ventilsitz (161) zugewandt ist;
wobei das Dichtelement (168) mit einem Kolbenelement (167) verbunden ist, das verschiebbar in dem Gehäuserohr (163) angeordnet ist;
wobei zwischen dem Kolbenelement (167) und dem Gehäuserohr (163) ein Drehnockenmechanismus ausgebildet ist, durch welchen das Kolbenelement (167) mittels axialer Verschiebung wechselweise zwischen einer Öffnungs- und einer Sperrstellung zu bewegen ist;
wobei zur Verschiebung des Kolbenelements (167) ein das Gehäuserohr (163) von außen umfassender Ringmagnet (150) vorgesehen ist, welcher gegen die Kraft wenigstens eines Rückstellelements (166) verschiebbar ist und welcher gegen eine über das Gehäuserohr (163) stülpbare Elektrospule austauschbar ist,
**dadurch gekennzeichnet,**
- **dass** die Magnetventileinheit (160) in einen Grundkörper (100) eingesetzt ist, der an seiner unteren Stirnseite eine Grundfläche (102) besitzt, an welcher wenigstens jeweils ein Wasserzulaufkanal (110) und wenigstens ein Wasserauslaufkanal (120, 130, 160) münden, zwischen denen der wenigstens eine Ventilsitz (161) ausgebildet ist;
- **dass** an einer oberen Seite des Grundkörpers (10) wenigstens eine Ventilaufnahme (124, 134, 142) ausgebildet ist, an der ein zylindrischer Rohrstutzen (122, 132, 143) angeordnet ist, dessen ringförmige Oberkante den Ventilsitz (161) bildet,
- **dass** ein Federelement (164) innerhalb des Gehäuserohrs (163) angeordnet ist, das eine Vorspannung des Kolbenelements (167) in Richtung des Ventilsitzes (161) bewirkt,
- und **dass** der Grundkörper (100) auf einen Unterputz-Anschlussblock (200) aufsetzbar ist, welcher an einer stirnseitigen Grundfläche (202) wenigstens zwei zu den Mündungen der Wasserzulauf- und -ablaufkanäle (110, 120, 130, 140) des Grundkörpers (100) korrespondierende Öffnungen aufweist, welche sich in je wenigstens einem, zu einer Seitenfläche des Unterputz-Anschlussblocks (200) führenden Wasserleitungskanal (205,206) fortsetzen.

2. Wasserschaltereinheit (100) nach Anspruch 1, **dadurch gekennzeichnet, dass** der Wasserauslaufkanal (110, 120, 130) jeweils von seiner Mündung an der Grundfläche (102) in den Rohrstutzen (132) übergeht.

3. Wasserschaltereinheit (100) nach Anspruch 1 oder 2, **dadurch gekennzeichnet, dass** für jede Magnetventileinheit (150) je ein Wasserzulaufkanal und ein Wasserauslaufkanal (120, 130, 140) vorgesehen sind.

4. Wasserschaltereinheit (100) nach einem der vorhergehenden Ansprüche, **dadurch gekennzeichnet, dass** ein gemeinsamer Wasserzulaufkanal (110) für mehrere Magnetventileinheiten (150) vorgesehen ist, von dem aus eine Verteilung zu den einzelnen Ventilsitzen (161) und darüber zu den jeweiligen Wasserauslaufkanälen (120, 130, 140) in der Grundfläche (101) des Grundkörpers (100) erfolgt.

5. Wasserschaltereinheit (100) nach Anspruch 4, **dadurch gekennzeichnet, dass** die Mündungsöffnungen (110, 120, 130, 140) an der Grundfläche (102) auf einem einheitlichen Teilkreis und mit ihren Mittelpunkten an Eckpunkten eines imaginären Quadrats liegen.

6. Wasserschaltsystem, wenigstens umfassend
- einen Unterputz-Anschlussblock (200) mit wenigstens zwei Rohrleitungsanschlüssen (205, 206) an einer Seitenfläche, von denen aus jeweils ein innen liegender Fließkanal ausgeht, der umgelenkt und zu Mündungsöffnungen (211, 212) an einer oberen Grundfläche (202) geführt ist;
- eine Wasserschaltereinheit (100) nach wenigstens einem der vorhergehenden Ansprüche, deren Grundkörper (101) an seiner Unterseite eine auf den Unterputz-Anschlussblock (200) abgestimmte, insbesondere ebene Grundfläche (101) aufweist,
wobei das Lochbild der Mündungsöffnungen (211, 212) in der Grundfläche (202) des Unterputz-Anschlussblocks (200) zu dem Lochbild der Mündungsöffnungen (110, 120, 130, 140) im Grundkörper (101) korrespondiert.

## Claims

1. Water switch unit (100) for interrupting and releasing at least one waterway in a sanitary installation,
wherein at least one valve seat (161) is formed between at least one water-inflow channel (110) and at least one water-outlet channel (120, 130, 140), the valve seat having inserted on it a bistable magnetic-valve unit (160), which can be positioned on the valve seat (161) by way of its sealing element (168);
wherein the magnetic-valve unit (160) has a housing tube (163), which is closed at the end and of which the opening is directed towards the valve seat (161);
wherein the sealing element (168) is connected to a piston element (167), which is arranged in a displaceable manner in the housing tube (163); wherein a cam mechanism is formed between the piston element (167) and the housing tube (163) and allows the piston element (167) to move alternately, by means of axial displacement, between an open position and a blocking position; wherein an annular magnet (150) which encloses the housing tube (163) from the outside is provided in order to displace the piston element (167), it being possible for said annular magnet to be displaced counter to the force of at least one restoring element (166) and to be exchanged for an electric coil which can be fitted over the housing tube (163),
**characterized**
- **in that** the magnetic-valve unit (160) is inserted into a main body (100) which, on its lower end side, has a surface area (102) in which at least in each case one water-inflow channel (110) and at least one water-outflow channel (120, 130, 160) open out, the at least one valve seat (161) being formed between said channels;
- **in that** an upper side of the main body (10) has formed on it at least one valve mount (124, 134, 142), on which is arranged a cylindrical pipe socket (122, 132, 143), of which the annular upper edge forms the valve seat (161),
- **in that** a spring element (164) is arranged within the housing tube (163) and prestresses the piston element (167) in the direction of the valve seat (161),
- and **in that** the main body (100) can be positioned on a flush-mounting connection block (200) which, on an end-side surface area (202), has at least two openings which correspond with the mouths of the water-inflow and -outflow channels (110, 120, 130, 140) of the main body (100) and continue in in each case at least one water-directing channel (205, 206) leading to a side surface of the flush-mounting connection block (200).

2. Water switch unit (100) according to Claim 1, **characterized in that** the water-outflow channel (110, 120, 130) merges into the pipe socket (132) in each case from its mouth on the surface area (102).

3. Water switch unit (100) according to Claim 1 or 2, **characterized in that** in each case one water-inflow channel and one water-outflow channel (120, 130, 140) are provided for each magnetic-valve unit (150).

4. Water switch unit (100) according to one of the preceding claims, **characterized by** the provision of a joint water-inflow channel (110) for a plurality of magnetic-valve units (150), distribution taking place from said joint water-inflow channel to the individual valve seats (161) and, beyond, to the respective water-outlet channels (120, 130, 140) in the surface area (101) of the main body (100).

5. Water switch unit (100) according to Claim 4, **characterized in that** the mouth openings (110, 120, 130, 140) on the surface area (102) are located on a single pitch circle and have their centre points located at corner points of an imaginary square.

6. Water-switching system at least comprising
- a flush-mounting connection block (200) with at least two pipeline connections (205, 206) on a side surface, in each case one inner flow channel extending from the at least two pipeline connections and being deflected and guided to mouth openings (211, 212) on an upper surface area (202);
- a water switch unit (100) according to at least one of the preceding claims, of which the main body (101) has, on its underside, an in particular planar surface area (101) coordinated with the flush-mounting connection block (200),
wherein the pattern formed by the mouth openings (211, 212) in the surface area (202) of the flush-mounting connection block (200) corresponds with the pattern formed by the mouth openings (110, 120, 130, 140) in the main body (101).

## Revendications

1. Unité (100) de commutation d'eau permettant d'interrompre et de libérer au moins une voie d'eau d'une installation sanitaire,
au moins un siège de soupape (161) sur lequel une unité (160) bistable de soupape magnétique à placer par son élément d'étanchéité (168) sur le siège de soupape (161) est inséré étant formé entre au moins un canal (110) d'amenée d'eau et au moins un canal (120, 130, 140) de sortie d'eau,
l'unité (160) de soupape magnétique présentant un tube de boîtier (163) formé à une extrémité et dont l'ouverture est tournée vers le siège de soupape (161),
l'élément d'étanchéité (168) étant relié à un élément de piston (167) disposé à coulissement dans le tube de boîtier (163),
un mécanisme à came rotative par lequel l'élément de piston (167) peut être déplacé sélectivement par coulissement axial entre une position d'ouverture et une position de fermeture étant formé entre l'élément de piston (167) et le tube de boîtier (163),
un aimant annulaire (150) entourant le tube de boîtier (163) par l'extérieur, apte à coulisser en opposition à la force d'au moins un élément de rappel (166) et remplaçable par une bobine électrique qui peut être enfichée au-dessus du tube de boîtier (163) étant prévu pour faire coulisser l'élément de piston (167), **caractérisée en ce que**
l'unité (160) de soupape magnétique est insérée dans un corps de base (100) qui présente à son côté frontal inférieur une surface de base (102) sur laquelle débouchent au moins un canal (110) d'amenée d'eau et au moins un canal (120, 130, 160) de sortie d'eau entre lesquels le ou les sièges de soupape (161) sont formés,
**en ce que** sur un côté supérieur du corps de base (10) est formé au moins un logement de soupape (124, 134, 142) sur lequel est disposée une tubulure cylindrique (122, 132, 143) dont le bord annulaire supérieur forme le siège de soupape (161),
**en ce qu'**un élément élastique (164) est disposé à l'intérieur du tube de boîtier (163) et exerce sur l'élément de piston (167) une précontrainte en direction du siège de soupape (161) et
**en ce que** le corps de base (100) peut être placé sur un bloc de raccordement encastré (200) qui présente sur une surface de base frontale (202) au moins deux ouvertures qui correspondent aux embouchures des canaux (110, 120, 130, 140) d'amenée d'eau et d'évacuation d'eau du corps de base (100) et qui se prolongent chacune en au moins un canal (205, 206) de conduite d'eau qui conduit vers une surface latérale du bloc de raccordement encastré (200).

2. Unité (100) de commutation d'eau selon la revendication 1, **caractérisée en ce que** le canal (110, 120, 130) de sortie d'eau devient la tubulure (132) à partir de son embouchure sur la surface de base (102).

3. Unité (100) de commutation d'eau selon les revendications 1 ou 2, **caractérisée en ce qu'**un canal d'amenée d'eau et un canal de sortie d'eau (120, 130, 140) sont prévus pour chaque unité (150) de soupape magnétique.

4. Unité (100) de commutation d'eau selon l'une des revendications précédentes, **caractérisée en ce qu'**un canal commun (110) d'amenée d'eau est prévu pour plusieurs unités (150) de soupape magnétique, une répartition vers les différents sièges de soupape (161) et par là vers chacun des canaux (120, 130, 140) de sortie d'eau s'effectuant dans la surface de base (101) du corps de base (100) à partir de ce canal commun.

5. Unité (100) de commutation d'eau selon la revendication 4, **caractérisée en ce que** sur la surface de base (102), les ouvertures d'embouchure (110, 120, 130, 140) sont situées sur un cercle partiel unitaire avec leurs centres sur les sommets d'un carré imaginaire.

6. Système de commutation d'eau comprenant au moins
un bloc de raccordement encastré (200) qui présente sur une surface latérale au moins deux raccords (205, 206) de conduit tubulaire de chacun desquels part un canal d'écoulement intérieur qui est dévié et guidé vers des ouvertures d'embouchure (211, 212) situées sur une surface de base supérieure (202),
une unité (100) de commutation d'eau selon au moins l'une des revendications précédentes, dont le corps de base (101) présente sur son côté inférieur une surface de base (101) accordée au bloc de raccordement encastré (200) et en particulier plane,
le profil de perforation des ouvertures d'embouchure (211, 212) dans la surface de base (202) du bloc de raccordement encastré (200) correspondant au profil de perforation des ouvertures d'embouchure (110, 120, 130, 140) formées dans le corps de base (101).
